**Europäisches Patentamt**

**European Patent Office**

**Office européen des brevets**

(11) Numéro de publication : **0 287 511 B1**

(12) **FASCICULE DE BREVET EUROPEEN**

<table>
<tr><td>(45) Date de publication du fascicule du brevet :<br>**04.03.92 Bulletin 92/10**</td><td>(51) Int. Cl.⁵ : **H04M 1/72, H04M 1/02**</td></tr>
</table>

(21) Numéro de dépôt : **88810221.7**

(22) Date de dépôt : **05.04.88**

---

(54) **Appareil téléphonique.**

---

(30) Priorité : **14.04.87 CH 1456/87**
**23.04.87 FR 8705795**

(43) Date de publication de la demande :
**19.10.88 Bulletin 88/42**

(45) Mention de la délivrance du brevet :
**04.03.92 Bulletin 92/10**

(84) Etats contractants désignés :
**AT BE DE ES GB IT NL SE**

(56) Documents cités :
**FR-A- 1 276 433**
**GB-A- 2 087 686**
**US-A- 4 107 477**

(73) Titulaire : **ETA S.A. Fabriques d'Ebauches**
**Schild-Rust-Strasse 17**
**CH-2540 Grenchen (CH)**

(72) Inventeur : **Thomke, Ernst**
**Allerheiligenstrasse 210**
**CH-2540 Grenchen (CH)**
Inventeur : **Kappeler, Markus**
**St. Josefsgasse 6**
**CH-4500 Soleure (CH)**

(74) Mandataire : **Barbeaux, Bernard et al**
**ICB Ingénieurs Conseils en Brevets SA**
**Passage Max. Meuron 6**
**CH-2001 Neuchâtel (CH)**

Jouve, 18, rue Saint-Denis, 75001 PARIS

EP 0 287 511 B1

## Description

La présente invention concerne les appareils téléphoniques.

Les appareils téléphoniques classiques, tels que ceux décrits dans les documents FR-A-1 276 433 et GB-A-2 087 686 comportent essentiellement un combiné dans lequel sont logés, notamment, un écouteur, un microphone, un clavier pour composer des numéros d'appel, ainsi qu'un ou plusieurs boutons d'actionnement associés à des circuits et à d'autres dispositifs, tels qu'une sonnerie.

Bien que ces types d'appareils aient l'avantage d'être extrêmement compacts, ils présentent l'inconvénient d'être limités dans leur utilisation puisqu'ils ne permettent pas une communication sur deux lignes, voire une communication simultanée entre plus de deux personnes sur une même ligne.

On connaît, par ailleurs, des appareils téléphoniques qui comprennent une base avec un clavier ou un disque pour composer des numéros d'appel et deux combinés qui peuvent être placés sur cette base (voir par exemple document US-A-4 107 477).

Ces appareils, qui permettent quant à eux à deux personnes de converser simultanément avec un même correspondant en utilisant une seule ligne ou avec des correspondants différents en utilisant deux lignes séparées ou bien encore les deux, sont encombrants.

Le but de l'invention est de fournir un appareil téléphonique qui permette une utilisation étendue telle que celle susmentionnée, mais qui ne présente pas l'inconvénient d'être volumineux.

Dans le cas d'une seule ligne, ce but est atteint grâce au fait que dans l'appareil selon l'invention, qui comporte alors:

– un combiné avec un boîtier dans lequel sont logés un premier écouteur et un premier microphone et une base capable de porter ce combiné, qui comprend un boîtier,

– un dispositif de sonnerie,

– un dispositif de sélection pour composer des numéros d'appel,

– un circuit vocal relié au premier écouteur et au premier microphone pour transmettre les signaux de conversation provenant de la ligne à ce premier écouteur et ceux produits par ce premier microphone à la ligne,

– un premier dispositif de commande actionnable par le combiné et,

– des moyens de commutation sur lesquels agit ce dispositif de commande pour connecter le dispositif de sélection et le circuit vocal à la ligne lorsque le combiné est décroché, la base comprend en plus un deuxième écouteur, un deuxième microphone et un deuxième dispositif de commande qui agit également sur les moyens de commutation pour permettre de connecter ce deuxième écouteur et ce deuxième microphone à la ligne lorsque le combiné est décroché et au fait que la forme du boîtier de la base et la disposition du deuxième écouteur et du deuxième microphone à l'intérieur de celui-ci sont telles que cette base peut être utilisée comme deuxième combiné.

Dans le cas de deux lignes le même but est atteint grâce au fait que l'appareil selon l'invention ne comprend pas seulement, à ce moment-là, au moins un boîtier, au moins un dispositif de sonnerie, un dispositif de sélection, un premier circuit vocal relié au premier écouteur et au premier microphone logés dans le combiné, un premier dispositif de commande actionnable par ce combiné, un deuxième dispositif de commande actionnable manuellement pour sélectionner l'une ou l'autre des lignes et des moyens de commutation sur lesquels agissent ce premier et ce deuxième dispositif de commande pour connecter le dispositif de sélection et le premier circuit vocal à la ligne sélectionnée lorsque le combiné est décroché mais aussi, associés à la base, un deuxième écouteur, un deuxième microphone, un deuxième circuit vocal relié à ce deuxième écouteur et à ce deuxième microphone et un troisième dispositif de commande qui agit également sur les moyens de commutation pour permettre de connecter le deuxième circuit vocal à la ligne non sélectionnée, lorsqu'il est actionné, et du fait que, là encore, la forme du boîtier de la base et la disposition du deuxième écouteur et du deuxième microphone à l'intérieur de celui-ci sont telles que cette base peut être utilisée comme deuxième combiné.

D'autre part, dans cette deuxième éventualité, il est préférable que les moyens de commutation soient prévus pour connecter le dispositif de sélection en même temps que le deuxième circuit vocal à la ligne non sélectionnée et, bien entendu, pour que le premier circuit vocal reste connecté à la ligne sélectionnée si il l'était déjà avant que le troisième dispositif de commande soit actionné. Grâce à cela la base peut servir non seulement à recevoir des appels extérieurs mais aussi à appeler des correspondants.

Enfin, que l'appareil soit prévu pour être branché au bout d'une seule ligne ou de deux, il est toujours avantageux que le deuxième dispositif de commande ou le troisième, selon le cas, comprenne un bouton-poussoir placé sous la base pour que le deuxième écouteur et le deuxième microphone soient automatiquement connectés à la ligne ou à la ligne non sélectionnée lorsque l'on soulève la base de son support et au contraire déconnectés lorsqu'on la repose sur ce support.

D'autres caractéristiques et avantages de l'invention apparaîtront à la lecture de la description qui suit de deux formes possibles d'exécution. Cette description se réfère au dessin annexé sur lequel:

– la figure 1 est une vue en perspective qui montre séparément la base et le combiné de l'appareil selon l'invention lorsqu'il est réalisé selon la première de ces formes d'exécution, la base étant vue surtout de dessus;

– la figure 2 est une autre vue en perspective de ce même appareil qui permet de voir le dessous de la base;

– la figure 3 est un schéma-bloc simplifié du circuit électrique de cet appareil;

– la figure 4 est une vue en perspective qui montre le dessus de la base de l'appareil selon l'invention lorsqu'il est réalisé selon l'autre forme d'exécution; et

– la figure 5 est un schéma-bloc simplifié du circuit électrique de l'appareil selon cette autre forme d'exécution.

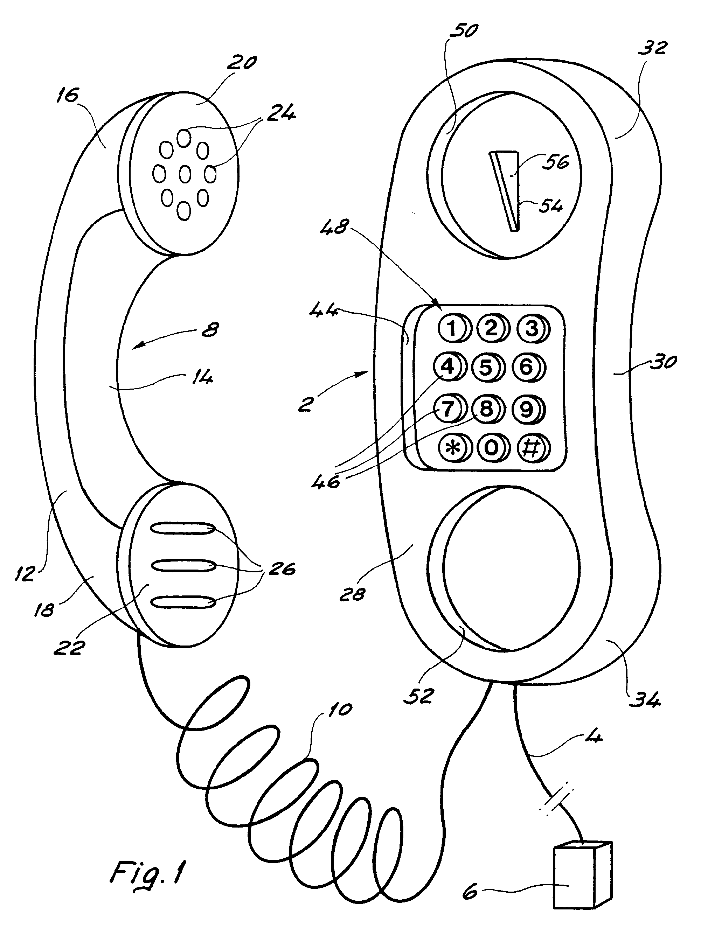

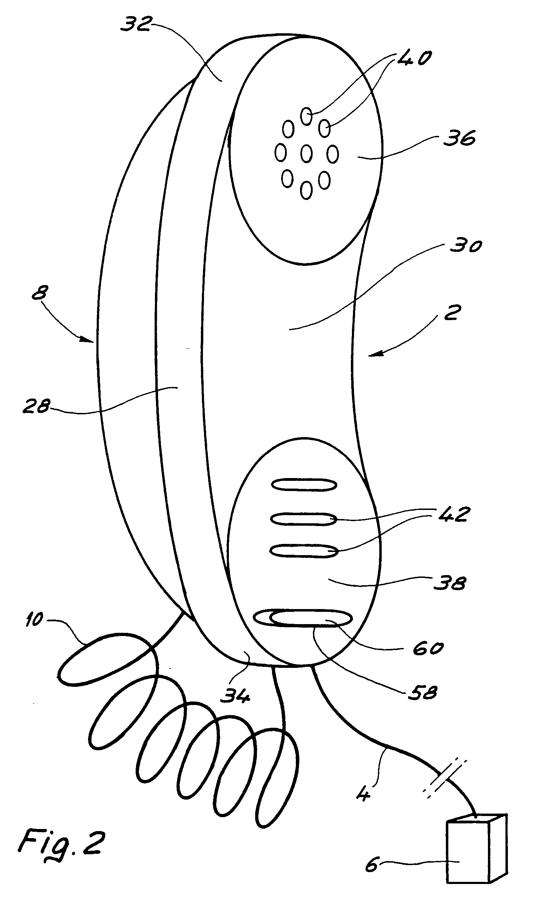

L'appareil téléphonique que l'on peut voir sur les figures 1 et 2 comporte une base 2 qui peut être reliée à une ligne téléphonique d'un réseau par l'intermédiaire d'un cordon 4 et d'une prise 6 et un combiné 8 qui peut être posé sur cette base et qui est relié à elle par un autre cordon 10.

Le combiné 8 n'a rien de spécial. Il comprend un boîtier 12 allongé et incurvé, avec une partie centrale 14 qui peut être facilement prise en main et deux parties terminales pratiquement identiques 16 et 18 avec des faces sensiblement planes 20 et 22 qui sont percées respectivement de trous 24 et de fentes 26 et derrière lesquelles se trouvent un écouteur et un microphone non représentés.

Dans ce mode d'exécution que l'on a choisi de décrire la base 2, qui contient évidemment, elle aussi, un écouteur et un microphone qui ne sont pas non plus visibles sur les figures 1 et 2, comprend un boîtier 28 dont la forme générale est semblable à celle du boîtier du combiné.

En effet, en regardant le dessin on constate que ce boîtier 28 est lui aussi allongé et incurvé et qu'il comprend comme l'autre une partie centrale 30 destinée à être prise en main et deux parties terminales 32 et 34 à peu près de même importance, qui présentent du côté qui constitue le dessous de la base des faces sensiblement planes 36 et 38, percées de trous 40 et de fentes 42 (voir figure 2) et dans lesquelles sont logés l'écouteur et le microphone dont on vient de parler.

Ceci dit, il y a aussi bien entendu des différences entre les deux.

La première différence c'est que le boîtier 28 de la base est un peu plus grand que celui du combiné.

La deuxième c'est que les faces 36 et 38 de la base sont situées sensiblement dans un même plan afin que celle-ci soit stable lorsqu'elle repose sur un support horizontal quelconque, par exemple sur une table de téléphone. Ceci n'est pas le cas ou tout au moins n'est pas nécessaire en ce qui concerne le combiné.

Naturellement, la planéité des faces 36 et 38 n'est pas une condition indispensable pour que cette stabilité soit assurée. Par exemple on obtiendrait le même résultat avec des faces légèrement creuses qui auraient leurs bords dans un même plan ou avec des faces un peu bombées qui auraient seulement des parties centrales planes et coplanaires ou encore en combinant ces deux possiblités.

La troisième différence entre les deux boîtiers c'est que le dessus ou le dos de celui de la base présente un évidement 44 situé dans sa partie centrale 30 du fond duquel émergent les douze touches 46 d'un clavier de sélection classique 48, et deux autres évidements plus petits 50 et 52, situés au contraire dans les parties terminales 32 et 34, qui ont une forme qui leur permet de recevoir les extrémités du combiné lorsque celui-ci est posé correctement sur la base et dans le fond de l'un, 32, desquels de trouve une fente 54, par laquelle peut sortir un bouton-poussoir de commande 56 qui a le même rôle que le crochet d'un appareil ordinaire. Tant qu'on laisse le combiné sur la base ce bouton de commande 56, que l'on qualifiera de "principal", reste enfoncé sous le poids de celui-ci et l'appareil ne peut pas fonctionner à l'exception de sa sonnerie. Par contre, lorsqu'on soulève le combiné le bouton 56 se relève automatiquement et l'appareil est alors connecté à la ligne au bout de laquelle il est branché.

Enfin, la quatrième chose qui différencie le boîtier de la base et celui du combiné c'est que la face 38 du premier présente, en plus des fentes 12 dont on a déjà parlé et qui sont prévues pour laisser passer le son de la voix, une autre fente 58 dans laquelle peut naviguer un bouton de commande auxiliaire 60 du même genre que le bouton 56 et qui, comme on le verra par la suite, commande la mise en circuit ou hors circuit du microphone et de l'écouteur contenus dans la base 2.

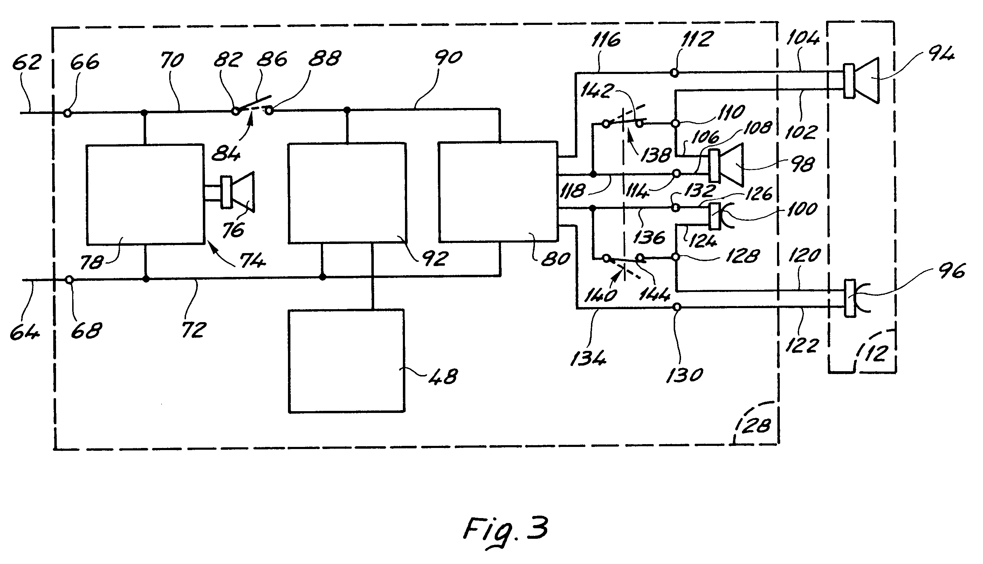

Après avoir surtout parlé de l'aspect extérieur de l'appareil on va maintenant décrire son circuit électrique en se reportant à la figure 3 sur laquelle les boîtiers 12 et 28 du combiné et de la base sont symbolisés par des rectangles en traitillés.

Sur cette figure les repères 62 et 64 désignent les deux fils du cordon 4 (voir figures 1 et 2) qui prolongent ceux de la ligne téléphonique au bout de laquelle l'appareil est sensé être branché et qui aboutissent à deux bornes respectives 66 et 68 du circuit.

De ces deux bornes partent deux conducteurs 70 et 72 qui, comme ceux dont on parlera par la suite, peuvent être constitués par des bandes conductrices d'un circuit imprimé et entre lesquels est branchée une sonnerie 74 composée d'un vibreur piézo-électrique 76 et de son circuit de commande 78.

Comme on peut le constater le conducteur 72 mène directement à un circuit 80 qui est un circuit vocal de téléphone tout-à-fait classique tandis que le conducteur 70 relie seulement la borne 66 à l'une des bornes 82 d'un interrupteur simple 84 dont le contact 86 est actionné par le bouton de commande principal 56 (voir figure 1) et dont l'autre borne 88 est reliée par un autre conducteur 90 au circuit vocal 80.

Comme on le sait, dans un appareil téléphonique ordinaire, le circuit vocal est celui qui transmet, en les traitant, les signaux de conversation qui proviennent de la ligne à l'écouteur et ceux qui sont produits par le microphone à la ligne.

D'autre part, on constate également qu'entre les conducteurs 72 et 90 est branché un autre circuit 92 lui aussi tout-à-fait classique. Ce circuit 92 qui est relié au clavier de sélection 48, schématisé sur la figure par un rectangle, est celui qui est chargé de produire et d'émettre sur la ligne des signaux d'appel lorsque l'on compose sur le clavier le numéro d'un correspondant.

D'après la façon dont ce circuit est branché on se rend compte que les signaux qu'il produit sont formés par des impulsions. Toutefois il est bien clair qu'il pourrait être remplacé par un circuit qui serait relié au circuit vocal 80 et qui produirait des signaux d'appel en combinant deux par deux des signaux de fréquences acoustiques différentes ou encore par un circuit qui serait capable de produire à la fois ce genre de signaux et des impulsions afin que l'appareil puisse être connecté à n'importe quel réseau.

Pour en terminer avec la description du circuit de la figure 3 il faut encore parler du branchement de l'écouteur 94 et du microphone 96 du combiné 12 et de l'écouteur 98 et du microphone 100 contenus dans la base 28.

Comme le montre cette figure chacun des écouteurs 94 et 98 a un fil 102, respectivement 106, qui le relie à une borne commune 110 du circuit et un autre fil 104, respectivement 108, qui le relie à une autre borne 112, respectivement 114, connectée par un conducteur 116, respectivement 118, au circuit vocal 80.

De même, chacun des microphones 96 et 100 a un fil 120, respectivement 124, qui le relie à une borne commune 128 et un autre fil 122, respectivement 126, qui le relie à une autre borne 130, respectivement 132, qui est elle-même reliée par un conducteur 134, respectivement 136, au circuit vocal.

En d'autres termes les deux écouteurs 94 et 98 sont branchés en série entre deux bornes qui sont reliées au circuit vocal et il en est de même pour les deux microphones 96 et 100.

De plus, on voit que deux interrupteurs simples 138 et 140 sont branchés l'un entre la borne 110 et le conducteur 118 et l'autre entre la borne 128 et le conducteur 136.

Les contacts 140 et 142 de ces deux interrupteurs qui permettent de court-circuiter l'écouteur 98 et le microphone 100 sont actionnés conjointement par le bouton de commande auxiliaire 60 de façon à être tous les deux en position d'ouverture ou en position de fermeture.

Naturellement, pour être complet il faudrait parler aussi de différents circuits d'alimentation et de protection, notamment contre les surtensions et les inversions de polarité de la tension d'entrée provenant de la ligne, qui existent dans un appareil selon l'invention comme dans tous les autres, mais comme ces circuits sont parfaitement connus et comme cela n'apporterait rien de plus à la compréhension de l'invention on peut se dispenser de le faire et ceci non seulement pour le mode d'exécution dont on est en train de parler mais aussi pour celui que l'on décrira par la suite.

Grâce à ce qui précède il est facile de s'imaginer comment fonctionne l'appareil des figures 1 à 3.

Tant qu'il reste posé sur un support et qu'on ne soulève pas le combiné les deux boutons de commande 56 et 60 restent enfoncés dans les fentes 54 et 58 du boîtier de la base et les contacts 86, 142 et 144 des interrupteurs 84, 138 et 140 se trouvent dans les positions indiquées en traits pleins sur la figure 3, c'est-à-dire que l'interrupteur 86 est ouvert alors que les deux autres sont fermés et court-circuitent ainsi l'écouteur 98 et le microphone 100.

Donc, comme on l'a déjà dit, dans cette situation seule la sonnerie 74 est connectée à la ligne pour signaler un éventuel appel venant de l'extérieur.

Si à un moment donné on soulève l'appareil tout entier, par exemple pour nettoyer son support ou pour le déplacer, le bouton de commande auxiliaire 60 se soulève lui aussi et les interrupteurs 138 et 140 s'ouvrent mais ceci n'a aucune conséquence car l'interrupteur principal 84 reste ouvert.

Si l'on désire appeler un correspondant on commence bien entendu par soulever le combiné, ce qui entraîne la fermeture de l'interrupteur 84. A partir de ce moment-là toutes les parties du circuit de l'appareil sont connectées à la ligne, à l'exception de l'écouteur 98 et du microphone 100 de la base car ceux-ci continuent alors à être court-circuités.

On peut donc ensuite composer le numéro du correspondant sur le clavier 48 et lorsqu'on l'a obtenu entretenir une conversation avec celui-ci.

Si une autre personne désire participer à cette conversation il lui suffit de prendre en main la base 2 et de l'utiliser comme un combiné. En effet dès que cette base est soulevée les interrupteurs 138 et 140 s'ouvrent et comme l'écouteur 94 et le microphone 96 du combiné ceux 98 et 100 de la base sont connectés à la ligne par l'intermédiaire du circuit vocal 80, des conducteurs 72, 90 et 70, du contact 86 de l'interrupteur 84 et des fils 62 et 64 du cordon 4.

Bien entendu, on peut aussi utiliser soi-même le combiné et la base, par exemple pour mieux entendre lorsqu'on se trouve dans une ambiance bruyante.

Par ailleurs, il est bien évident que lorsque l'on reçoit un appel tout se passe de la même façon excepté que, dans ce cas, on n'a pas besoin de composer un numéro.

Avant de décrire le deuxième mode d'exécution que l'on a choisi comme exemple il est intéressant de préciser trois choses.

La première c'est que l'on pourrait très bien réaliser les interrupteurs 84, 138 et 140 en utilisant des transistors plutôt que des contacts mobiles et réunir dans une même puce de circuit intégré ces interrupteurs, le circuit vocal 80, le circuit de sélection 92 et même éventuellement le circuit 78 de la sonnerie.

La deuxième c'est que l'on pourrait aussi brancher les deux écouteurs 90 et 98 et les deux microphones 96 et 100 en parallèle plutot qu'en série.

Enfin, la troisième chose c'est que l'on pourrait également prévoir un circuit vocal pour l'écouteur et le microphone du combiné et un autre pour ceux de la base. Dans ce cas il suffirait de prévoir un interrupteur sur l'un des deux conducteurs qui aboutiraient à ce deuxième circuit pour le connecter à la ligne ou le déconnecter de celle-ci.

Ce qui distingue essentiellement l'appareil que l'on va décrire maintenant du précédent c'est qu'il est prévu pour être branché au bout de deux lignes téléphoniques distinctes et non plus d'une seule.

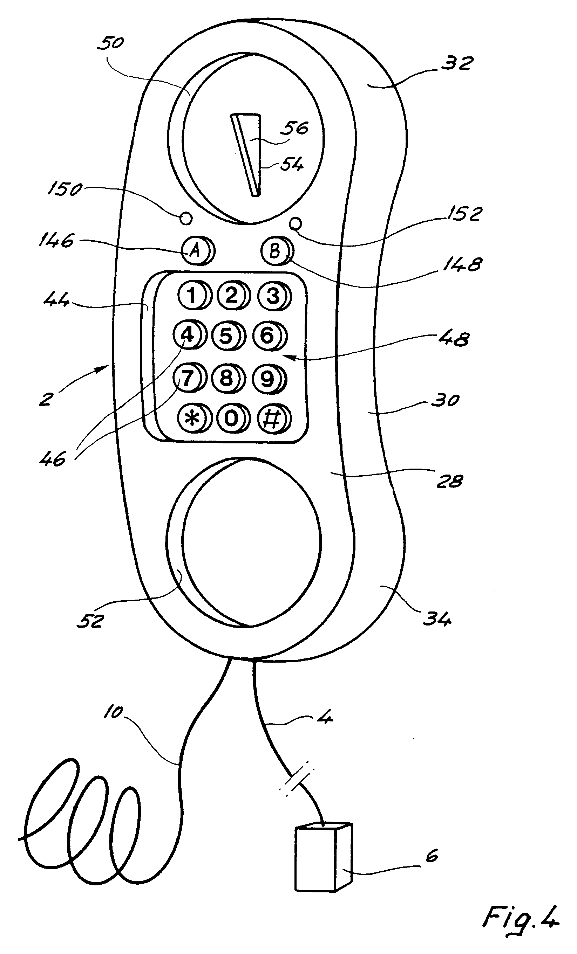

Extérieurement il y a très peu de différence entre les deux. Tout d'abord le combiné reste le même. C'est la raison pour laquelle on ne l'a pas représenté sur la figure 4.

D'autre part, la base qui est désignée encore sur cette figure par le repère 2 conserve exactement la même forme et comprend les mêmes parties ou éléments 28 à 60 visibles de l'extérieur que dans la forme d'exécution précédente.

La seule nouveauté c'est la présence de deux boutons-poussoirs 146 et 148 qui sont situés au-dessus du clavier 48 et sur lesquels sont marquées les lettres A et B et de deux diodes électro-luminescentes (LED) 150 et 152 associées à ces deux boutons et placées au-dessus de ceux-ci.

Dans ce mode d'exécution les deux boutons-poussoirs 146 et 148 qui, comme on le verra par la suite, servent à choisir la ligne sur laquelle on désire appeler en premier un correspondant ou relier le combiné à la ligne sur laquelle on est appelé, ne sont pas indépendants. Ils sont liés mécaniquement de façon que lorsque l'un des deux est enfoncé, l'autre est forcément soulevé. Ils sont donc équivalents à un bouton rotatif à deux positions stables ou à un bouton coulissant comme ceux que l'on trouve dans beaucoup d'interrupteurs qui permettent d'allumer ou d'éteindre une lampe électrique ou de faire fonctionner des appareils ménagers.

Quant aux deux diodes 150 et 152, elles servent simplement à indiquer en s'allumant la ligne d'où provient un appel.

Dans des variantes on pourrait évidemment aussi utiliser des boutons-poussoirs à une seule position stable ou au contraire des boutons à trois positions stables dont une neutre qui serait la position intermédiaire.

De plus, on pourrait s'arranger pour que les diodes indiquent aussi la ligne que l'on a choisie pour appeler un correspondant.

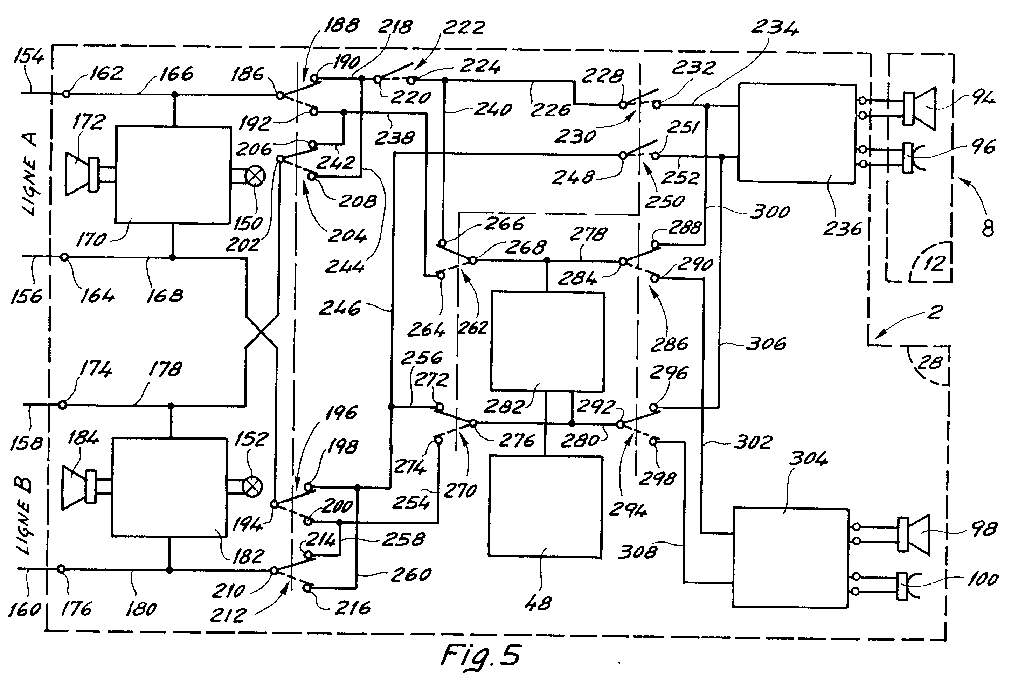

Si l'on se reporte à la figure 5 qui montre le circuit de l'appareil, on voit à gauche les extrémités de deux fils 154 et 156 qui prolongent ceux d'une ligne A et celles de deux autres fils 158 et 160 qui prolongent ceux d'une ligne B, ces quatre fils se trouvant tous dans un même cordon 4 (voir figure 4) grâce auquel l'appareil peut être branché au bout de ces lignes.

Les deux fils 154 et 156 arrivent à deux bornes 162 et 164 du circuit d'où partent deux conducteurs 166 et 168 qui aboutissent aux bornes communes 186 et 194 de deux commutateurs bistables 188 et 196 et entre lesquels est branché un circuit de sonnerie 170 qui commande non seulement un vibreur 172 mais aussi la diode électroluminescente 150.

De même les deux fils 158 et 160 arrivent à deux bornes 174 et 176 d'où partent deux conducteurs 178 et 180 qui mènent aux bornes communes 202 et 210 de deux autres commutateurs bistables 204 et 212 et entre lesquels est branché un second circuit de sonnerie 182 qui commande un second vibreur 184 ainsi que la diode 152.

Comme il y a déjà les diodes qui indiquent la ligne par laquelle un appel est transmis, il n'est pas nécessaire que les deux vibreurs émettent des sons de fréquences différentes mais cette possibilité n'est évidemment pas exclue.

En ce qui concerne les commutateurs 188, 196, 204 et 212, on voit grâce au trait discontinu qui les relie sur la figure qu'ils sont tous commandés en même temps. Par contre, ce que cette figure ne montre pas, c'est qu'ils le sont par les boutons-poussoirs 146 et 148.

A noter que si ces boutons avaient trois positions stables comme cela a été envisagé précédemment, il en serait de même pour les commutateurs et la position de coupure de ceux-ci correspondrait naturellement à la position neutre et intermédiaire des boutons.

Si l'on regarde maintenant le haut de la figure, on constate que l'une des bornes non communes 190 du commutateur 188 est reliée par un conducteur 218 à l'une des bornes d'un interrupteur simple 222 qui est le seul du circuit à être actionné par le bouton de commande principal 56 de l'appareil. L'autre borne 224 de cet interrupteur est reliée par un conducteur 226 à l'une des bornes 228 d'un autre interrupteur simple 230 dont le contact est actionné par le bouton de commande auxiliaire, situé comme précédemment sous la base 28, et dont l'autre borne 232 est reliée par un conducteur 234 à un premier circuit vocal 236 auquel sont connectés par quatre fils et quatre conducteurs non numérotés l'écouteur 94 et le microphone 96 du combiné 8.

L'autre borne non commune 192 du commutateur 188 est reliée, elle, par un conducteur 238, à l'une des bornes non communes 264 d'un cinquième commutateur bistable 262 dont on reparlera par la suite et dont l'autre borne non commune 266 est reliée au conducteur 226 par un conducteur 240.

Pour ce qui est des bornes non communes 206 et 208 du commutateur 204 on voit qu'elles sont simplement reliées respectivement aux conducteurs 218 et 238 par des conducteurs 242 et 244.

Par ailleurs, de l'une des bornes non communes 198 du commutateur 196 part un conducteur 246 qui mène à l'une des bornes 248 d'un troisième interrupteur 250 dont le contact est également actionné par le bouton de commande auxiliaire 60 et dont l'autre borne 251 est connectée par un conducteur 252 au circuit vocal 236.

L'autre borne non commune 200 de ce même commutateur 196 est reliée, elle, par un conducteur 254 à l'une des bornes non communes 274 d'un sixième commutateur bistable 270 dont l'autre borne non commune 272 est reliée au conducteur 246 par un conducteur 256.

Enfin, pour en finir avec les commutateurs 188, 196, 204 et 212, il faut encore préciser que les deux bornes non communes 214 et 216 du dernier de ceux-ci sont reliées respectivement aux conducteurs 254 et 246 par des conducteurs 258 et 260.

Pour en revenir aux commutateurs 262 et 270, on voit que de leurs bornes communes respectives 268 et 276 partent deux conducteurs 278 et 280 qui aboutissent aux deux bornes également communes 284 et 292 d'un septième et d'un huitième commutateur bistable 286 et 294 et entre lesquels est branché un circuit 282 qui est le circuit de sélection de l'appareil et qui est bien entendu relié au clavier 48. Ce circuit de sélection est tout à fait classique et peut être identique à celui du mode d'exécution précédent.

De plus, grâce aux lignes en traitillés qui les relient, on comprend que les quatre commutateurs 262, 270, 286 et 294 sont actionnés par le même bouton que les interrupteurs 230 et 250 et en même temps qu'eux.

Reste maintenant à indiquer à quoi sont reliées les bornes non communes des commutateurs 286 et 294.

Pour ce qui est du premier, on voit que l'une d'elles 288 est connectée au conducteur 234 par un conducteur 300 et que de l'autre 290 part un conducteur 302 qui mène à un deuxième circuit vocal 304 auquel sont reliés l'écouteur 98 et le microphone 100 logés dans la base.

En ce qui concerne le second, 294, l'une de ses bornes non communes 296 est reliée au conducteur 252 par un conducteur 306 et l'autre, 298, au circuit vocal 304 par un conducteur 308.

On va maintenant expliquer comment fonctionne l'appareil que l'on vient de décrire.

Pour cela, supposons que l'on se trouve dans la situation où c'est le bouton 146, associé à la ligne A, qui est enfoncé. Dans ce cas les contacts des quatre premiers commutateurs 188, 196, 204 et 212 sont dans les positions indiquées en traits pleins sur la figure 5, ce qui fait que leurs bornes communes 186, 194, 202 et 210 sont reliées à leurs bornes non communes 190, 198, 206 et 214.

Tant que la base 2 reste posée sur un support et tant que le combiné 8 est en place, les boutons de commande principal et auxiliaire sont tous les deux enfoncés et les contacts des trois interrupteurs 222, 230, 250 et des commutateurs 262, 270, 286 et 294 occupent aussi les positions représentées en traits pleins sur la figure, c'est-à-dire que les interrupteurs sont ouverts et que les bornes communes 268, 276, 284 et 292 des commutateurs sont reliées respectivement à leurs bornes non communes 266, 272, 288 et 296.

Supposons maintenant que l'on veuille appeler un correspondant en utilisant la ligne A.

Pour cela, on commence par soulever le combiné, ce qui a pour conséquence de fermer l'interrupteur principal 222 sans modifier l'état des deux autres interrupteurs ni la position des huit commutateurs.

A partir de ce moment-là, le premier circuit vocal 236 est relié aux bornes 162 et 164, donc à la ligne A par une première ligne interne qui comprend, d'une part, une partie du conducteur 234, le conducteur 300, le contact du commutateur 286, le conducteur 278, le contact du commutateur 262, le conducteur 240, une partie du conducteur 226, le contact de l'interrupteur 222, le conducteur 218, le contact du commutateur 188 et le conducteur 166 et, d'autre part, par une partie du conducteur 252, le conducteur 306, le contact du commutateur 294, le conducteur 280, le contact du commutateur 270, le conducteur 256, une partie du conducteur 246, le contact du commutateur 196 et le conducteur 168.

De plus, étant donné qu'il est branché entre les conducteurs 278 et 280 qui font partie de cette ligne interne, le circuit de sélection 282 est lui aussi connecté à la ligne A.

Donc pour appeler le correspondant que l'on désire, il suffit de composer son numéro lorsque l'on entend la tonalité. Ensuite, on peut converser avec lui si on a pu l'atteindre et lorsqu'à la fin on repose le combiné, l'interrupteur 222 s'ouvre à nouveau et rompt la ligne interne.

Si, pendant qu'on est en ligne avec ce correspondant, une autre personne désire en appeler un autre, elle commence par soulever la base et comme le bouton de commande auxiliaire est alors libéré, les interrupteurs 230 et 248 se ferment et les contacts du commutateurs 262, 270, 286 et 294 passent tous les quatre dans les positions qui sont indiquées en traits interrompus sur la figure 5, ce qui fait que le premier circuit vocal que l'on utilise est relié aux bornes 162 et 164 par une deuxième ligne interne plus directe que la première. Cette deuxième ligne comprend en effet, d'une part, le conducteur 234, le contact de l'interrupteur 230, le conducteur 226, le contact de l'interrupteur 222, le conducteur 218, le contact du commutateur 188 et le conducteur 166 et, d'autre part, le conducteur 252, le contact de l'interrupteur 250, le conducteur 246, le contact du commutateur 196 et le conducteur 168.

Quant au deuxième circuit vocal 304, il est relié, lui, aux bornes 174 et 176, donc à la ligne B, par une troisième ligne interne qui comprend, d'une part, le conducteur 302, le contact du commutateur 286, le conducteur 278, le contact du commutateur 262, une partie du conducteur 238, le conducteur 242, le contact du commutateur 204, et le conducteur 178 et, d'autre part, le conducteur 308, le contact du commutateur 294, le conducteur 280, le contact du commutateur 270, une partie du conducteur 254, le conducteur 258, le contact du commutateur 212 et le conducteur 180.

Par conséquent, étant donné que les conducteurs 278 et 280 font partie de cette troisième ligne interne, le circuit de sélection est lui aussi connecté à la ligne B et l'autre personne a la possibilité de composer le numéro du correspondant auquel elle désire parler et de s'entretenir avec lui.

Si on a soi-même terminé pendant que cette autre personne est encore en liaison avec son correspondant, on peut alors appuyer sur le bouton de commande principal 56 et poser le combiné. La liaison entre le premier circuit vocal 236 et la ligne A est aini interrompue un court instant par l'interrupteur 222 et rétablie ensuite, ce qui fait que cette ligne reste occupée jusqu'à ce que l'autre personne ait terminé et ait remis le combiné en place.

Si cela est possible, on peut aussi remettre le combiné en place sur la base et laisser l'autre personne continuer de téléphoner avec l'appareil complet en main. Dans ce cas, la ligne A redevient libre.

Supposons maintenant que pendant que l'on est en communication avec un correspondant, la sonnerie de la ligne B retentisse et que la diode 152 s'allume. Il suffit alors de prendre la base et de répondre ou de laisser une autre personne le faire. Du point de vue du circuit on se retrouve exactement dans la même situation que lorsqu'une autre personne appelle un correspondant pendant que l'on est soi-même en communication. La seule différence c'est qu'il n'y a pas de numéro d'appel à composer.

Revenons maintenant au point de départ et supposons que l'on reçoive un appel sur la ligne B. Dans ce cas il suffit d'appuyer sur le bouton 148 et de prendre le combiné ou de faire l'inverse pour répondre.

En effet, le changement de position de ce bouton entraîne celui des contacts des commutateurs 188, 196, 204 et 212 et la connection du premier circuit vocal 236 aux bornes 174 et 176 par une quatrième ligne interne qui est formée, d'une part, par une partie du conducteur 234, le conducteur 300, le contact du commutateur 286, le conducteur 278, le contact du commutateur 262, le conducteur 240, une partie du conducteur 226, le contact de l'interrupteur principal 222, une partie du conducteur 218, le conducteur 244, le contact du commutateur 204 et le conducteur 178 et, d'autre part, par une partie du conducteur 252, le conducteur 306, le contact du commutateur 294, le conducteur 280, le contact de commutateur 270, le conducteur 256, une partie du conducteur 246, le conducteur 260, le contact du commutateur 212 et le conducteur 180.

Naturellement, quelques autres situations peuvent se présenter mais grâce aux exemples qui précèdent, il est facile de savoir ce qui se passerait alors. Il n'est donc pas nécessaire de les envisager aussi ici.

D'autre part, il est clair que l'invention n'est pas limitée aux modes d'exécution qui ont été décrits ou suggérés.

Par exemple on pourrait remplacer le bouton de commande auxiliaire 60 par un autre sur lequel on presserait pour pouvoir utiliser la base comme second combiné.

Le clavier de sélection pourrait éventuellement être remplacé par un disque d'appel.

Dans le cas d'un appareil pour deux lignes on pourrait s'arranger pour que deux personnes puissent aussi s'entretenir avec un même correspondant.

On pourrait très bien imaginer aussi un mode d'exécution intéressant dans lequel le combiné ne serait plus relié au circuit vocal ou à l'un des circuits vocaux par un cordon mais par radio. Dans ce cas l'appareil devrait comprendre en plus un premier émetteur, un premier récepteur et une batterie logés dans le boîtier du combiné, une première antenne reliée au premier récepteur qui pourrait être aussi incluse dans ce boîtier ou être une antenne extérieure, par exemple télescopique, un second récepteur, un second émetteur relié au circuit vocal et une seconde antenne associés à la base et enfin un système d'alimentation avec un convertisseur AC/DC pour permettre de recharger la batterie du combiné pendant que l'appareil n'est pas utilisé.

Si la base était trop petite pour contenir le second émetteur et le second récepteur on pourrait les réunir avec le convertisseur AC/DC dans un boîtier auxiliaire d'où sortirait la seconde antenne et d'où partiraient un câble à deux fils muni d'une prise pour connecter le convertisseur au secteur et un autre câble à trois ou quatre fils pour amener le courant du convertisseur dans la base et pour relier le second émetteur au circuit vocal.

Par ailleurs en admettant que la base et le combiné soient comme ceux de la figure 1, on pourrait alors prévoir deux bornes au fond de l'évidement 52 auxquels aboutiraient les deux fils d'alimentation qui partiraient du convertisseur et deux plages de contact correspondantes situées sur la face 22 du combiné et reliées à la batterie pour permettre le rechargement de celle-ci.

De plus, il est évident que le combiné et surtout la base peuvent avoir d'autres formes, plus ou moins esthétiques, et que cette dernière peut porter le combiné autrement que dans les modes d'exécution que l'on a choisis comme exemples.

## Revendications

1. Appareil téléphonique destiné à être branché au bout d'une ligne téléphonique et comportant:
   – un combiné (8) qui comprend un boîtier (12) dans lequel sont logés un premier écouteur (94) et un premier microphone (96), et une base (2) capable de porter ce combiné, qui comprend un boîtier (28),
   – un dispositif de sonnerie (74),
   – un dispositif de sélection (48, 92) pour composer des numéros d'appel,
   – un circuit vocal (80) relié au premier écouteur et au premier microphone pour transmettre les signaux de conversation provenant de la ligne à ce premier écouteur et ceux produits par ce premier microphone à la ligne,
   – un premier dispositif de commande (56) actionnable par le combiné et,
   – des moyens de commutation (84, 138, 140) sur lesquels agit le dispositif de commande pour connecter le dispositif de sélection et le circuit vocal à la ligne lorsque le combiné est décroché, caractérisé par le fait que la base comprend en plus un deuxième écouteur (98), un deuxième microphone (100) et un deuxième dispositif de commande (60) qui agit également sur les moyens de commutation pour permettre de connecter ce deuxième écouteur et ce deuxième microphone à la ligne quand le combiné est décroché et par le fait que la forme du boîtier de la base et la disposition du deuxième écouteur et du deuxième microphone à l'intérieur de celui-ci sont telles que cette base peut être utilisée comme deuxième combiné.

2. Appareil téléphonique selon la revendication 1, caractérisé par le fait que le deuxième dispositif de commande comprend un bouton-poussoir (60) placé sous la base (2) qui permet de déconnecter automatiquement le deuxième écouteur (98) et le deuxième microphone (100) de la ligne lorsque la base est posée sur un support et de les connecter au contraire à la ligne lorsque cette base est soulevée.

3. Appareil téléphonique selon la revendication 1 ou 2, caractérisé par le fait que le deuxième écouteur (98) et le deuxième microphone (100) sont connectés à la ligne par l'intermédiaire du circuit vocal (80).

4. Appareil téléphonique selon la revendication 3, caractérisé par le fait que le deuxième écouteur (98) et le deuxième microphone (100) sont branchés en série respectivement avec le premier écouteur et le premier microphone (96) et que les moyens de commutation (84, 138, 140) comprennent deux interrupteurs (138, 140) actionnés simultanément par le deuxième dispositif de commande (60), qui déconnectent le deuxième écouteur et le deuxième microphone de la ligne en les court-circuitant.

5. Appareil téléphonique destiné à être branché au bout de deux lignes téléphoniques et comportant:
   – un combiné (8) qui comprend un boîtier (12) dans lequel sont logés un premier écouteur (94) et un premier microphone (96), et une base (2) capable de porter ce combiné, qui comprend un boîtier (28),
   – au moins un dispositif de sonnerie (170, 172),
   – un dispositif de sélection (48, 282) pour composer des numéros d'appel,
   – un premier circuit vocal (236) relié au premier écouteur et au premier microphone pour transmettre les signaux de conversation provenant d'une ligne à ce premier écouteur et ceux produits par ce premier microphone à cette ligne,
   – un premier dispositif de commande (56) actionnable par le combiné,
   – un deuxième dispositif de commande (146, 148) actionnable manuellement pour sélectionner l'une ou l'autre des lignes et,
   – des moyens de commutation (188, 196, 204, 212, 222, 230, 250, 262, 270, 286, 294) sur lesquels agissent ce premier et ce deuxième dispositif de commande pour connecter le dispositif de sélection et le premier circuit vocal à la ligne sélectionnée lorsque le combiné est décroché, caractérisé par le fait que la base comprend en plus un deuxième écouteur (98), un deuxième microphone (100), un deuxième circuit vocal (304) relié à ce deuxième écouteur et à ce deuxième microphone et un troisième dispositif de commande (60) qui agit également sur les moyens de commutation pour permettre de connecter le deuxième circuit vocal à la ligne non sélectionnée, lorsqu'il est actionné, et par le fait que la forme du boîtier de la base et la disposition du deuxième écouteur et du deuxième microphone à l'intérieur de celui-ci sont telles que cette base peut être utilisée comme deuxième combiné.

6. Appareil téléphonique selon la revendication 5, caractérisé par le fait que les moyens de commutation (188, 196, 204, 212, 222, 230, 250, 262, 270, 286, 294) sont prévus pour connecter le dispositif de sélection (48, 282) en même temps que le deuxième circuit vocal (304) à la ligne non sélectionnée et pour que le premier circuit vocal (236) reste connecté à la ligne sélectionnée si il l'était déjà avant que le troisième dispositif de commande (60) soit actionné.

7. Appareil téléphonique selon la revendication 5 ou 6, caractérisé par le fait que le troisième dispositif de commande comprend un bouton-poussoir (60) placé sous la base (2) qui permet de déconnecter automatiquement le deuxième écouteur (98) et le deuxième microphone (100) de la ligne non sélectionnée lorsque la base est posée sur un support et de les connecter au contraire à cette ligne lorsque la base est soulevée.

8. Appareil téléphonique selon l'une quelconque des revendications 5 à 7, caractérisé par le fait que le deuxième dispositif de commande comprend deux boutons-poussoirs (146, 148) placés sur la base (2) et associés chacun à l'une des lignes.

9. Appareil téléphonique selon la revendication 8, caractérisé par le fait que la base (2) comprend également deux diodes électroluminescentes (150, 152) associées aux boutons-poussoirs (146, 148) pour signaler la ligne d'où provient un appel.

10. Appareil téléphonique selon l'une quelconque des revendications 5 à 9, caractérisé par le fait que la base (2) comprend deux dispositifs de sonnerie (170, 172 et 182, 184) associés chacun à une ligne.

**Patentansprüche**

1. Telefonapparat, bestimmt zum Anschluss an das Ende einer Telefonleitung und umfassend :
– einen Handapparat (8), der ein Gehäuse (12) umfasst, in dem ein erster Lautsprecher (94) und ein erstes Mikrophon (96) untergebracht sind, und eine Basis (2), die diesen Handapparat tragen kann, die ein Gehäuse (28) umfasst,
– ein Läutwerk (74),
– eine Wählvorrichtung (48, 92) zum Eingeben von Rufnummern,
– einen mit dem ersten Lautsprecher und mit dem ersten Mikrophon verbundenen Sprechkreis (80) zum übertragen von von der Leitung kommenden Gesprächssignalen zu diesem ersten Lautsprecher sowie jener, erzeugt von diesem ersten Mikrophon, zu der Leitung,
– eine von dem Handapparat betätigbare erste Steuervorrichtung (56), und
– Umschaltmittel (84, 138, 140), auf die die Steuervorrichtung einwirkt zum Verbinden der Wählvorrichtung und des Sprechkreises mit der Leitung, wenn der Handapparat abgehoben ist, gekennzeichnet durch die Tatsache, dass die Basis zusätzlich einen zweiten Lautsprecher (98), ein zweites Mikrophon (100) und eine zweite Steuervorrichtung (60) umfasst, die ebenfalls auf die Umschaltmittel einwirkt zum Ermöglichen des Verbindens dieses zweiten Lautsprechers und dieses zweiten Mikrophons mit der Leitung, wenn der Handapparat abgehoben ist, und durch die Tatsache, dass die Form der Basis und die Anordnung des zweiten Lautsprechers und des zweiten Mikrophons im Innern derselben derart sind, dass diese Basis als zweiter Handapparat verwendet werden kann.

2. Telefonapparat nach Anspruch 1, gekennzeichnet durch die Tatsache, dass die zweite Steuervorrichtung eine unter der Basis (2) plazierte Drucktaste (60) umfasst, die es ermöglicht, automatisch den zweiten Lautsprecher (9S) und das zweite Mikrophon (100) von der Leitung zu trennen, wenn die Basis auf eine Unterlage gesetzt wird, und umgekehrt dazu sie mit der Leitung zu verbinden, wenn diese Basis angehoben wird.

3. Telefonapparat nach Anspruch 1 oder 2, gekennzeichnet durch die Tatsache, dass der zweite Lautsprecher (98) und das zweite Mikrophon (100) an die Leitung über den Sprechkreis (80) angeschlossen werden

4. Telefonapparat nach Anspruch 3, gekennzeichnet durch die Tatsache, dass der zweite Lautsprecher (98) und das zweite Mikrophon (100) in Serie mit dem ersten Lautsprecher bzw. dem ersten Mikrophon (96) geschaltet sind und dass die Umschaltmittel (84, 138, 140) zwei simultan von der zweiten Steuervorrichtung (60) betätigte Unterbrecher (138, 140) umfassen, die den zweiten Lautsprecher und das zweite Mikrophon von der Leitung trennen, indem sie sie kurzschliessen.

5. Telefonapparat, bestimmt zum Anschluss an das Ende zweier Telefonleitungen und umfassend :
– einen Handapparat (8), der ein Gehäuse (12) umfasst, in dem ein erster Lautsprecher (94) und ein erstes Mikrophon (96) untergebracht sind, und eine Basis (2), die diesen Handapparat tragen kann, die ein Gehäuse (28) umfasst,
– mindestens ein Läutwerk (170, 172),
– eine Wählvorrichtung (48, 282) zum Eingeben von Rufnummern,
– einen mit dem ersten Lautsprecher und mit dem ersten Mikrophon verbundenen ersten Sprechkreis (236) zum übertragen von von einer Leitung kommenden Gesprächssignalen zu diesem ersten Lautsprecher und sowie jener, erzeugt von diesem ersten Mikrophon, zu dieser Leitung,
– eine von dem Handapparat betätigbare erste Steuervorrichtung (56),
– eine manuell betätigbare zweite Steuervorrichtung (146, 148) zum Auswählen der einen oder anderen der Leitungen, und
– Umschaltmittel (188, 196, 204, 212, 222, 230, 250, 262, 270, 286, 294), auf die diese erste und diese zweite Steuervorrichtung einwirken zum Verbinden der Wählvorrichtung und des ersten Sprechkreises mit der ausgewählten Leitung, wenn der Handapparat abgehoben ist, gekennzeichnet durch die Tatsache, dass die Basis zusätzlich einen zweiten Lautsprecher (98), ein zweites Mikrophon (100), einen mit diesem zweiten Lautsprecher und diesem zweiten Mikrophon verbundenen zweiten Sprechkreis (304 sowie eine dritte Steuervorrichtung (60) umfasst, die ebenfalls auf die Umschaltmittel einwirkt, um das Verbinden des zweiten Sprechkreises mit der nichtausgewählten Leitung zu ermöglichen, wenn sie betätigt ist, und durch die Tatsache, dass die Form des Gehäuses der Basis und die Anordnung des zweiten Lautsprechers und des zweiten Mikrophons im Innern derselben derart sind, dass diese Basis als zweiter Handapparat verwendet werden kann.

6. Telefonapparat nach Anspruch 5, gekennzeichnet durch die Tatsache, dass die Umschaltmittel (188, 196, 204, 212, 222, 230, 250, 262, 270, 286, 294) vorgesehen sind zum Verbinden der Wählvorrichtung (48, 282) mit der nichtausgewählten Leitung gleichzeitig mit dem zweiten Sprechkreis (304) und damit der erste Sprechkreis (236) an die ausgewählte Leitung angeschlossen bleibt, wenn er es bereits war, bevor die dritte Steuervorrichtung (60) betätigt wurde.

7. Telefonapparat nach Anspruch 5 oder 6, gekennzeichnet durch die Tatsache, dass die dritte Steuervorrichtung eine unter der Basis (2) plazierte Drucktaste (60) umfasst, die es ermöglicht, automatisch den zweiten Lautsprecher (98) und das zweite Mikrophon (100) von der nichtausgewählten Leitung zu trennen, wenn die Basis auf eine Unterlage gesetzt wird, und umgekehrt dazu sie mit dieser Leitung zu verbinden, wenn die Basis angehoben wird.

8. Telefonapparat nach einem der Ansprüche 5 bis 7, gekennzeichnet durch die Tatsache, dass die zweite Steuervorrichtung zwei auf der Basis (2) plazierte und jeweils einer der Leitungen zugeordnete Drucktasten (146, 148) umfasst.

9. Telefonapparat nach Anspruch 8, gekennzeichnet durch die Tatsache, dass die Basis (2) gleichermassen zwei den Drucktasten (146, 148) zugeordnete Elektrolumineszenzdioden (150, 152) zum Signalisieren der Leitung, auf der ein Ruf einläuft, umfasst.

10. Telefonapparat nach einem der Ansprüche 5 bis 9, gekennzeichnet durch die Tatsache, dass die Basis (2) zwei, jeweils einer der Leitungen zugeordnete Läutwerke (170, 172 und 182, 184) umfasst.

**Claims**

1. Telephone for connection to one end of a telephone line, and comprising :
   – a handset (8) having a casing (12) housing a first receiver (94) and a first microphone (96), and a base (2) able to support this handset, which comprises a casing (28),
   – ringing means (74),
   – selector means (48, 92) for dialling telephone numbers,
   – a speech circuit (80) connected to the first receiver and to the first microphone to transmit conversation signals arriving on the line to this first receiver and those produced by this first microphone to the line,
   – first control means (56) actuatable by the handset, and
   – switching means (84, 138, 140) that can be acted upon by the control means to connect the selector means and the speech circuit to the line when the handset is taken off, characterized in that the base further comprises a second receiver (98), a second microphone (100) and second control means (60) also able to act on the switching means to enable this second receiver and this second microphone to be connected to the line when the handset is taken off and in that the base casing has a shape and the second receiver and the second microphone have an arrangement within the base casing, such that this base may be used as a second handset.

2. Telephone according to claim 1, characterized in that the second control means include a push-button (60) placed underneath the base (2) which enables the second receiver (98) and the second microphone (100) to be automatically disconnected from the line when the base is put on a support and which enables them on the contrary to be connected to the line when the base is lifted.

3. Telephone according to claim 1 or 2, characterized in that the second receiver (98) and the second microphone (100) are connected to the line via the speech circuit (80).

4. Telephone according to claim 3, characterized in that the second receiver (98) and the second microphone (100) are connected in series with the first receiver and the first microphone (96) respectively and in that the switching means (84, 138, 140) include a pair of switches (138, 140) arranged to be simultaneously actuated by the second control means (60) which disconnect the second receiver and the second microphone from the line by short-circuiting them.

5. Telephone for connection to one end of a pair of telephone lines, and comprising :
   – a handset (8) having a casing (12) housing a first receiver (94) and a first microphone (96), and a base (2) able to support this handset, which comprises a casing (28),
   – at least one ringing means (170, 172),
   – selector means (48, 282) for dialling telephone numbers,
   – a first speech circuit (236) connected to the first receiver and to the first microphone to transmit conversation signals arriving on one line to this first receiver and those produced by this first microphone to said line,
   – first control means (56) actuatable by the handset,
   – second control means (146, 148) actuatable manually to select one or other of the lines, and

– switching means (188, 196, 204, 212, 222, 230, 250, 262, 270, 286, 294) that can be acted upon by this first and this second control means to connect the selector means and the first speech circuit to the selected line when the handset is taken off, characterized in that the base further comprises a second receiver (98), a second microphone (100), a second speech circuit (304) connected to this second receiver and to this second microphone and third control means (60) also able, upon being actuated, to act on the switching means to enable the speech circuit to be connected to the unselected line, and in that the base casing has a shape and the second receiver and the second microphone have an arrangement within the base casing, such that this base may be used as a second handset.

6. Telephone according to claim 5, characterized in that the switching means (188, 196, 204, 212, 222, 230, 250, 262, 270, 286, 294) are arranged to connect the selector means (48, 282) at the same time as the second speech circuit (304) to the unselected line and to leave the first speech circuit (236) connected to the selected line if it already was connected before actuation of the third control means (60).

7. Telephone according to claim 5 or 6, characterized in that the third control means include a push-button (60) placed underneath the base (2) which enables automatically to disconnect the second receiver (98) and the second microphone (100) from the unselected line when it is placed on a support and to connect them to this line when the base is lifted.

8. Telephone according to any one of claims 5 to 7, characterized in that the second control means include a pair of push-buttons (146, 148) placed on the base (2) and each associated with one of the lines.

9. Telephone according to claim 8, characterized in that the base (2) further comprises a pair of light emitting diodes (150, 152) associated with the push-buttons (146, 148) to signal on which line an incoming call is being made.

10. Telephone according to any one of claims 5 to 9, characterized in that the base (2) comprises a pair of ringing means (170, 172 and 182, 184) each associated with one line.

Fig.1

Fig.2

Fig. 3

Fig.4

Fig.5

LIGNE A

LIGNE B